# DEMANDE DE BREVET EUROPEEN

(11) **EP 4 721 874 A1**
(43) Date de publication de la demande: **08.04.2026**
(21) Numéro de dépôt: 25205992.8
(22) Date de dépôt: 01.10.2025
(51) Int. Cl.: B05B 15/652, B05B 15/68, B05B 1/04

(54) **PISTOLET DE PULVÉRISATION AVEC INDEXATION ANGULAIRE, BAGUE, ENSEMBLE ET PROCÉDÉ ASSOCIÉS**

(30) Priorité: 02.10.2024 FR 2410604
(71) Demandeur: Exel Industries, 51200 Epernay (FR)
(72) Inventeur: DOS SANTOS, Paulo, 93600 AULNAY SOUS BOIS (FR); DA GRACA, Airton, 93500 PANTIN (FR); JOAQUIM, Fabrice, 93240 STAINS (FR)
(74) Mandataire: Lavoix

(57) **Abrégé**

La présente invention concerne un pistolet (10) de pulvérisation de produit de revêtement comprenant un corps (12), une tête de pulvérisation (14) et une buse de pulvérisation (16). Le pistolet (10) comprend une bague (18) reliant la tête de pulvérisation (14) et le corps (12), et un élément de maintien angulaire de la position angulaire entre la bague (18) et la tête de pulvérisation (14). Le pistolet (10) comprend un élément de blocage (22) déplaçable entre une position de blocage, dans laquelle il bloque la position angulaire de la bague (18) par rapport au corps (12), et une position de libération, dans laquelle il permet une rotation angulaire de la bague (18) par rapport au corps (12).

L'invention concerne en outre une bague, un ensemble et un procédé associés.

## Description

La présente invention concerne un pistolet de pulvérisation de produit de revêtement comprenant un corps, une tête de pulvérisation et une buse de pulvérisation, la tête de pulvérisation délimitant un passage, la buse de pulvérisation étant agencée dans le passage de la tête de pulvérisation.

L'invention concerne en outre une bague, un ensemble et un procédé associés.

La position angulaire de la tête de pulvérisation et la buse de pulvérisation est réglable par rapport au corps du pistolet.

Cela est particulièrement important pour la qualité du revêtement et pour limiter la perte de produit de revêtement en dehors d'une surface à revêtir.

Une fois le réglage de ladite position angulaire effectué, il peut être avantageux de maintenir ladite position angulaire, en particulier pour éviter de devoir refaire le réglage.

Une solution serait alors de fixer la tête de pulvérisation par rapport au corps.

Cependant, en cas de maintenance du pistolet, et notamment de la tête et de la buse, la tête est démontée du corps. Ainsi, la position angulaire n'est alors pas maintenue, et il est nécessaire de faire un nouveau réglage.

Le but de l'invention est alors de proposer un pistolet de pulvérisation permettant de maintenir une position angulaire entre la tête de pulvérisation et le corps, y compris en cas de maintenance.

A cet effet, l'invention a pour objet un pistolet de pulvérisation de produit de revêtement comprenant un corps, une tête de pulvérisation et une buse de pulvérisation, la tête de pulvérisation délimitant un passage, la buse de pulvérisation étant agencée dans le passage de la tête de pulvérisation, caractérisé en ce que le pistolet comprend une bague, la bague reliant la tête de pulvérisation et le corps, le pistolet comprenant un élément de maintien angulaire de la position angulaire entre la bague et la tête de pulvérisation, le pistolet comprenant un élément de blocage, l'élément de blocage étant déplaçable entre une position de blocage, dans laquelle il bloque la position angulaire de la bague par rapport au corps, et une position de libération, dans laquelle il permet une rotation angulaire de la bague par rapport au corps.

Ainsi, grâce à l'élément de maintien angulaire, la position angulaire entre la bague et la tête de pulvérisation est fixe. Il est possible de régler la position angulaire entre la tête de pulvérisation et le corps, lorsque l'élément de blocage est en position de libération. Lorsque la position angulaire est correcte, l'élément de blocage est déplacé en position de blocage, de sorte à maintenir la position angulaire entre la bague et le corps, et ainsi entre la tête de pulvérisation et le corps. En cas de maintenance, la tête est susceptible d'être détachée de la bague, la bague restant sur le corps dans la position angulaire maintenue par l'élément de blocage, puis la tête est remontée sur la bague dans la position angulaire de l'élément de maintien angulaire.

Suivant d'autres aspects avantageux de l'invention, le pistolet comprend une ou plusieurs des caractéristiques suivantes, prises isolément ou suivant toutes les combinaisons techniquement possibles :
- l'élément de blocage comprend une tige pourvue d'un épaulement, la tige se déplaçant entre la position de blocage et la position de libération, telle que, dans la position de blocage, l'épaulement exerce une force pressant la bague contre le corps selon une direction axiale ;
- la tête de pulvérisation présente un axe principal, la tige se déplaçant entre la position de blocage et la position de libération en translation selon la direction axiale, la direction axiale étant parallèle à l'axe principal de la tête de pulvérisation ;
- le corps présente un orifice débouchant sur une face avant du corps, la bague s'étendant contre la face avant du corps dans la position de blocage de l'élément de blocage, la tige s'étendant partiellement dans l'orifice, le corps présentant une ouverture s'étendant entre une face latérale du corps et l'orifice, de sorte que la tige est accessible depuis la face latérale par l'ouverture ;
- le pistolet comprend une vis, l'ouverture étant taraudée, la vis étant agencée dans l'ouverture et étant apte à être vissé autour d'un axe de vissage jusqu'à une position de maintien de la tige, dans laquelle la vis s'étend contre un renfoncement de la tige, le renfoncement présentant un chanfrein, le chanfrein étant tel que, lorsque la vis est vissée jusqu'à la position de maintien de la tige, la tige est déplacée vers la position de blocage ;
- l'élément de maintien angulaire de la position angulaire entre la bague et la tête de pulvérisation maintient en outre la position angulaire entre la tête de pulvérisation et la buse de pulvérisation ; et/ou
- l'élément de maintien angulaire de la position angulaire entre la bague et la tête de pulvérisation comprend au moins un élément d'indexation, la bague présentant au moins une découpe complémentaire de l'au moins un élément d'indexation, la tête de pulvérisation présentant au moins un trou complémentaire de l'au moins un élément d'indexation, le ou chaque élément d'indexation s'étendant à travers la ou une découpe respective et le ou un trou respectif.

L'invention concerne également une bague adaptée pour s'étendre entre un corps de pistolet de pulvérisation de produit de revêtement et un ensemble comprenant une tête de pulvérisation et une buse de pulvérisation, la bague présentant au moins une découpe complémentaire d'au moins un élément d'indexation, l'au moins une découpe étant agencée de sorte qu'un élément d'indexation s'étendant à travers la ou une découpe respective est adaptée pour s'étendre à travers un trou de la tête de pulvérisation.

L'invention concerne également un ensemble comprenant une tête de pulvérisation pour un pistolet de pulvérisation de produit de revêtement, l'ensemble comprenant en outre au moins un élément d'indexation, la tête de pulvérisation présentant au moins un trou complémentaire de l'au moins un élément d'indexation, la tête de pulvérisation définissant un côté arrière à l'opposé de la pulvérisation du produit de revêtement, le ou chaque élément d'indexation s'étendant à travers la ou un trou respectif, dépassant dudit trou du côté arrière puis de la tête de pulvérisation selon une direction axiale de la tête de pulvérisation.

L'invention concerne également un procédé d'indexation d'une position angulaire entre un corps et une tête de pulvérisation d'un pistolet tel que décrit précédemment, comprenant les étapes suivantes :
- Fourniture du pistolet tel que décrit précédemment, l'élément de blocage étant dans la position de libération,
- Positionnement de la bague par rapport au corps dans une position angulaire relative,
- Déplacement de l'élément de blocage dans la position de blocage, de sorte que la bague, et ainsi la tête de pulvérisation, sont maintenues dans la position angulaire relative par rapport au corps.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue en coupe partielle d'un pistolet selon un mode de réalisation de l'invention,

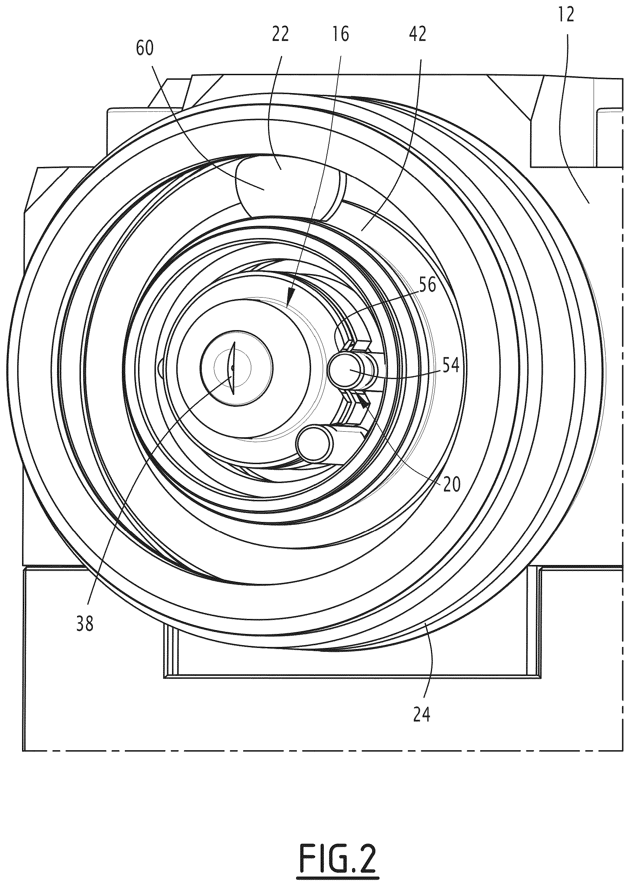

[Fig 2] la figure 2 est une vue en perspective du pistolet de la figure 1, sans la tête de pulvérisation,

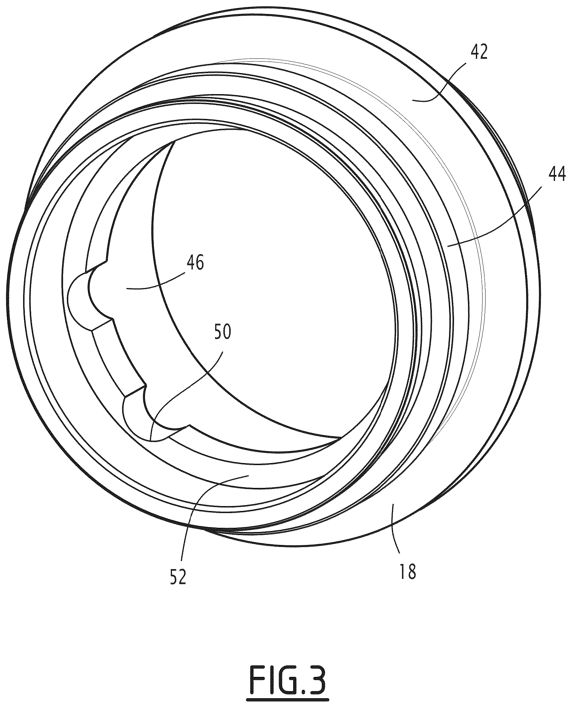

[Fig 3] la figure 3 est une vue en perspective de la bague du pistolet de la figure 1, et

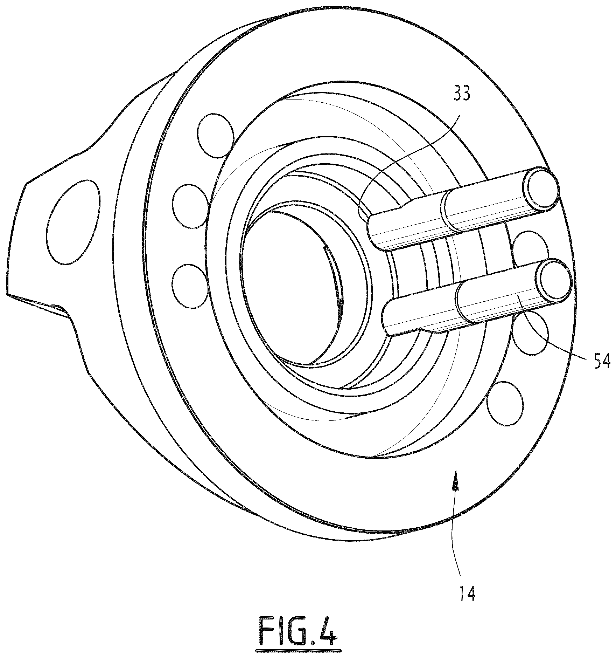

[Fig 4] la figure 4 est une vue en perspective de la tête et des éléments d'indexation du pistolet de la figure 1.

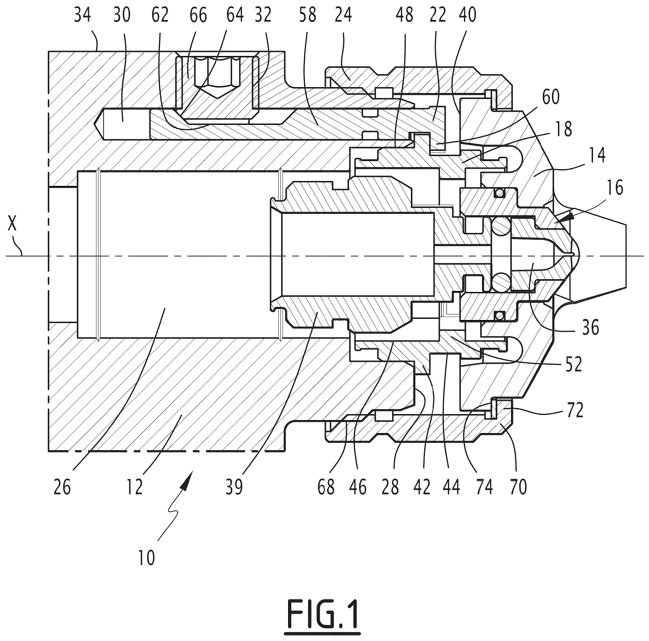

Un pistolet 10 de pulvérisation de produit de revêtement selon un exemple de l'invention est partiellement représenté sur la figure 1.

Le pistolet 10 comprend un corps 12, une tête de pulvérisation 14, une buse de pulvérisation 16, et une bague 18.

Le pistolet 10 comprend en outre un élément de maintien angulaire 20.

Le pistolet 10 comprend en outre un élément de blocage 22.

Le pistolet 10 comprend en outre ici, par exemple, un anneau extérieur 24.

Le corps 12 est adapté pour recevoir un ensemble comprenant la tête de pulvérisation 14 et la buse de pulvérisation 16, plus particulièrement ici comprenant la tête de pulvérisation 14, la buse de pulvérisation 16 et la bague 18.

Le corps 12 présente, plus particulièrement, un passage 26 pour le produit de revêtement.

Le passage 26 présente une sortie en aval, sur laquelle est agencée l'ensemble comprenant la tête de pulvérisation 14, la buse de pulvérisation 16 et la bague 18.

Le passage 26 au niveau de la sortie s'étend autour d'un axe principal X.

Le corps 12 présente une face avant 28, dans laquelle débouche ici la sortie du passage 26.

Le corps 12 présente ici un orifice 30 débouchant dans la face avant 28.

L'orifice 30 s'étend ici parallèlement à l'axe principal X.

L'orifice 30 s'étend ici perpendiculairement à la face avant 28.

L'orifice 30 est, par exemple, borgne.

L'orifice 30 est, par exemple, cylindrique.

Le corps 12 présente ici en outre une ouverture 32 s'étendant entre une face latérale 34 du corps 12 et l'orifice 30.

L'ouverture 32 est, par exemple, taraudée.

L'ouverture 32 s'étend perpendiculairement à l'orifice 30.

La tête de pulvérisation 14 délimite un passage, la buse de pulvérisation 16 étant agencée dans le passage de la tête de pulvérisation

La tête de pulvérisation 14 définit un côté arrière 40 à l'opposé de la pulvérisation du produit de revêtement.

La tête de pulvérisation 14 présente un axe principal autour duquel elle s'étend.

L'axe principal de la tête de pulvérisation 14 est confondu avec l'axe principal X.

La tête de pulvérisation 14 présente, par exemple, ici au moins un trou 33.

Le ou chaque trou 33 présente une forme complémentaire d'un élément d'indexation décrit ci-après, par exemple une goupille.

Le ou chaque trou 33 présente, sur l'exemple représenté, une forme de cercle.

Le ou chaque trou 33 s'étend parallèlement à l'axe principal de la tête de pulvérisation.

La buse de pulvérisation 16 est solidaire de la tête de pulvérisation 14.

La position angulaire de la buse de pulvérisation 16 par rapport à la tête de pulvérisation 14, autour de l'axe principal X, est fixe ou maintenue fixe, par exemple comme cela sera décrit ci-après.

La buse de pulvérisation 16 s'étend en outre ici autour d'un axe principal confondu avec l'axe principal X.

La buse de pulvérisation 16 délimite un passage 36 pour la pulvérisation de produit de revêtement.

La buse de pulvérisation 16 présente, par exemple, une sortie en forme de fente 38, de sorte à pulvériser le produit de revêtement sous la forme d'un jet plat.

La buse 16 est montée sur la tête de pulvérisation 14.

Ici, la tête de pulvérisation 14et la buse 16 sont montées sur un porte siège 39, lui-même monté sur le corps 12.

Le montage de la tête de pulvérisation 14 sur le corps 12 par le porte siège ne permet pas ici un blocage angulaire entre le corps 12 et la tête de pulvérisation 14.

La bague 18 est ici montée dans le corps 12 et maintenue en position par l'élément de blocage 22.

La bague 18 relie, plus particulièrement angulairement selon l'axe X, la tête de pulvérisation 14 et le corps 12.

La bague 18 s'étend ici autour de l'axe principal X.

La bague 18 présente une surface externe 44 et une surface interne 46, la surface interne 46 faisant face à l'axe principal X, la surface externe 44 étant opposée à la surface interne 46.

La bague 18 comprend un épaulement 42 apte à être maintenu contre la face avant 28 du corps par l'élément de blocage 22.

L'épaulement 42 est agencé sur la surface externe 44 de la bague 18.

L'épaulement 42 s'étend sur l'ensemble d'une circonférence de la bague 18.

La bague 18 comprend, d'un côté de l'épaulement 42 selon l'axe principal X, une portion dite interne 48, la portion interne 48 étant prévue pour s'étendre dans le passage 26 du corps 12.

La portion interne 48 s'étend contre une paroi interne de la sortie du passage 26.

Lorsque l'épaulement 42 s'étend contre la surface avant 28, la bague 18 est reliée au passage de manière fluidiquement étanche.

La bague 18 présente au moins une découpe 50, plus particulièrement s'étendant parallèlement à l'axe principal X, ici deux découpes.

La bague 18 présente autant de découpes 50 que la tête 14 ne présente de trous 33.

La ou chaque découpe 50 présente une forme complémentaire d'un élément d'indexation, par exemple une goupille.

Les découpes 50 sont, par exemple, agencés sur un même diamètre de la bague 18.

L'au moins une découpe 50 est ici prévue sur une protubérance 52 circonférentielle.

La protubérance 52 s'étend en relief de la paroi interne 46 de la bague 18.

La paroi interne 46 présente une forme cylindrique à l'exception de la protubérance 52.

La protubérance 52 s'étend au moins sur une portion d'une circonférence de la bague 18, plus particulièrement ici sur toute une circonférence de la bague.

L'au moins une découpe 50 traverse, ici complètement ou partiellement, la protubérance selon une direction parallèle à l'axe principal X.

La ou chaque découpe 50 présente une forme creuse complémentaire d'au moins un élément d'indexation, décrit ci-après, ici une forme d'arc de cercle.

Le(s) trou(s) 33 et la (les) découpe(s) 50 sont agencés, respectivement, sur la tête 14 et sur la bague 18, de sorte que, lorsqu'ils sont alignés angulairement autour de l'axe principal X, un élément d'indexation respectif, ici une goupille, passant dans un trou 33 coopère avec une découpe 50 correspondante.

Ici, chaque trou 33 est aligné selon la direction parallèle à l'axe principal X, dite direction axiale, avec la découpe 50 correspondante.

Le cercle de l'arc présente un diamètre égal au cercle du trou 33 correspondant.

La bague 18 présente ici une symétrie de rotation autour de l'axe principal X, à l'exception de l'au moins une découpe 50.

L'élément de maintien angulaire 20 est un élément de maintien de la position angulaire entre la bague et la tête de pulvérisation.

Ici, l'élément de maintien angulaire 20 comprend au moins un, ici deux, élément d'indexation 54, plus particulièrement ici au moins une goupille.

L'au moins une goupille est ici cylindrique.

Alternativement, l'au moins un élément d'indexation présente une forme différente d'une goupille cylindrique.

Le ou chaque élément d'indexation 54 est, par exemple, ici une pièce distincte.

Alternativement, le ou chaque élément d'indexation 54 est, par exemple, une protubérance de la tête 14. Le ou chaque élément d'indexation 54 est, par exemple, alors réalisé par usinage de la tête. Le cas échéant, la tête de pulvérisation 14 ne présente alors, par exemple, pas de trou 33.

Chaque élément d'indexation 54 s'étend selon la direction axiale.

Le ou chaque élément d'indexation 54 s'étend à travers une découpe 50 respective et le trou correspondant.

Le ou chaque élément d'indexation 54 présente une forme et des dimensions telles qu'il n'y a pas de jeu angulaire entre la tête 14 et la bague 18, le ou chaque élément d'indexation 54 bloquant toute rotation de la tête 14 par rapport à la bague 18.

Lorsque le ou chaque élément d'indexation 54 est une pièce séparée de la tête 14, le ou chaque élément d'indexation 54 s'étend à travers le ou un trou respectif 33 de la tête de pulvérisation 14, dépasse dudit trou 33 du côté arrière 40, puis dépasse selon la direction axiale de la tête de pulvérisation 14.

Ainsi, l'élément de maintien angulaire 20 maintient la position angulaire entre la bague et la tête de pulvérisation.

Ici, l'élément de maintien angulaire 20 de la position angulaire entre la bague et la tête de pulvérisation maintient en outre la position angulaire entre la tête de pulvérisation 14 et la buse de pulvérisation 16.

La buse de pulvérisation 16 comprend, par exemple, également au moins une découpe 56.

La buse de pulvérisation 16 présente autant de découpes 56 que la tête 14 ne présente de trous 33.

La ou chaque découpe 56 présente une forme complémentaire de l'élément d'indexation 54.

Les découpes 56 sont, par exemple, agencés sur un même diamètre de la buse de pulvérisation 16.

La ou les découpes 56 sont agencée sur la buse 16, de sorte que, lorsqu'ils sont alignés angulairement autour de l'axe principal X, un élément d'indexation 54 respectif passant dans un trou 33 coopère avec une découpe 56 correspondante.

Ici, chaque trou 33 est aligné selon la direction axiale avec la découpe 56 correspondante.

Ainsi, ici, chaque trou 33 est aligné selon la direction axiale avec une découpe 50 et une découpe 56 correspondantes.

Le ou chaque élément d'indexation 54 s'étend à travers un trou 33, une découpe 56 et une découpe 50.

La découpe 56 est telle que qu'il n'y a pas de jeu angulaire entre la tête 14 et la buse 16, le ou chaque élément d'indexation 54 bloquant toute rotation de la tête 14 par rapport à la buse 16.

Ainsi, l'élément de maintien angulaire 20 maintient la position angulaire entre la bague, la tête de pulvérisation et la buse de pulvérisation.

Le fait d'avoir un maintien de la position angulaire entre la bague, la tête de pulvérisation et la buse de pulvérisation par un système de maintien permet notamment un réglage angulaire particulièrement précis.

Alternativement, l'élément de maintien angulaire 20 de la position angulaire entre la bague et la tête de pulvérisation ne maintient pas la position angulaire entre la tête de pulvérisation 14 et la buse de pulvérisation 16, mais uniquement entre la bague 18 et la tête 14.

Le ou chaque élément d'indexation 54 s'étend, alors, par exemple, uniquement à travers un trou 33 et une découpe 50.

La position angulaire entre la buse et la tête de pulvérisation est, par exemple, alors maintenue par un système secondaire de maintien angulaire, comprenant alors, par exemple, au moins un élément d'indexation secondaire, distinct de l'au moins un élément d'indexation 54.

Chacune de la buse et de la tête de pulvérisation comprend alors, par exemple, au moins une découpe secondaire. Plus particulièrement, la buse comprend autant de découpe secondaire que n'en a la tête de pulvérisation et que le nombre d'élément d'indexation secondaire.

La ou chaque découpe secondaire présente une forme complémentaire de l'élément d'indexation secondaire.

Chaque découpe secondaire de la buse est alignée selon la direction axiale avec une découpe secondaire de la tête.

Les découpes secondaires sont, par exemple, agencées sur un diamètre de la pièce respective différent des découpes 50, 56.

Le ou chaque élément d'indexation secondaire s'étend à travers une découpe secondaire de la buse et une découpe secondaire de la tête.

Le ou chaque élément d'indexation secondaire permet de bloquer la position angulaire de la buse par rapport à la tête.

Ainsi, l'élément de maintien angulaire 20 est apte à maintenir la position angulaire entre la bague et la tête de pulvérisation, et l'élément de maintien secondaire maintient la position angulaire entre la tête de pulvérisation et la buse de pulvérisation.

Cela permet notamment d'avoir des éléments de maintien plus courts, solidaires et bien stables par rapport à la tête, de réaliser l'indexation entre la tête et la buse avant de visser la tête, et éventuellement de permettre un démontage du porte siège sans toucher à la bague.

L'élément de blocage 22 est déplaçable entre une position de blocage, dans laquelle il bloque la position angulaire de la bague 18 par rapport au corps 12, et une position de libération, dans laquelle il permet une rotation angulaire de la bague 18 par rapport au corps 12.

L'élément de blocage 22 comprend une tige 58 pourvue d'un épaulement 60.

L'épaulement 60 est agencée dans une portion d'extrémité de la tige 58.

Ici, la tige 58 s'étend partiellement dans l'orifice 30.

La tige 58 est, par exemple, accessible depuis la face latérale 34 par l'ouverture 32, c'est-à-dire qu'une partie de la tige 58 s'étend en regard de l'ouverture 32.

La portion d'extrémité, dont l'épaulement 60, s'étend en dehors de l'orifice 30.

La tige 58 est apte à se déplacer en translation dans l'orifice 30, plus particulièrement uniquement en translation selon la direction axiale.

Entre la position de blocage et la position de libération, la tige 58 se déplace en translation selon la direction axiale.

L'épaulement 60 s'étend en saillie de la tige 58 en direction de l'axe principal X, par exemple selon une direction perpendiculaire à l'axe principal X.

L'épaulement 60 présente une dimension telle qu'il s'étend en regard de l'épaulement 42 selon la direction axiale.

La tige 58 est apte à se déplacer entre la position de blocage et la position de libération, telle que, dans la position de blocage, l'épaulement 60 exerce une force pressant la bague 18 contre le corps 12 selon la direction axiale, plus particulièrement contre la face avant 28 du corps 12 selon la direction axiale.

Dans la position de blocage, l'épaulement 60 exerce plus particulièrement une force pressant l'épaulement 42 contre la face avant 28.

Cela évite tout mouvement, y compris de rotation, entre la bague 18 et le corps 12.

Dans la position de libération, la tige 58 est translatée, de sorte que l'épaulement 60 soit écarté du corps 12.

Ainsi, dans la position de libération, la tige 58 ne presse pas la bague 18 contre le corps 12, ce qui permet de déplacer la bague 18 par rapport au corps 12, en particulier en rotation autour de l'axe principal X.

La tige 58 présente, par exemple, avantageusement un renfoncement 62.

Le renfoncement 62 s'étend en regard de l'ouverture 32, lorsque la tige 58 est en position de blocage, et également lorsque la tige 58 est en position de libération.

Le renfoncement 62 présente, par exemple, ici, un chanfrein 64.

Le chanfrein 64 forme une extrémité du renfoncement à l'opposé de l'épaulement 60.

Le chanfrein 64 forme une surface en biais par rapport à la direction axiale et à la direction radiale, i.e. perpendiculaire à l'axe principal X.

Le pistolet 10 comprend, en outre, une vis 66.

La vis 66 est agencée dans l'ouverture et est apte à être vissée autour d'un axe de vissage jusqu'à une position de maintien de la tige, dans laquelle la vis s'étend contre le renfoncement 62 de la tige, plus particulièrement ici contre le chanfrein 64 du renfoncement 62.

Dans la position de maintien de la tige, la tige 58 est maintenue en position, plus particulièrement en position de blocage.

Le chanfrein 64 est tel que, lorsque la vis 66 est vissée jusqu'à la position de maintien de la tige, la tige 58 est déplacée vers la position de blocage, plus particulièrement la tige 58 est entraînée selon la direction axiale vers le corps 12, jusqu'à entrer en butée contre l'épaulement 42.

Lorsque la vis 66 n'est pas dans la position de maintien de la tige, la tige 58 est déplaçable selon la direction axiale, plus particulièrement entre la position de blocage et la position de libération.

L'anneau extérieur 24 entoure partiellement la tête de pulvérisation 14.

L'anneau extérieur 24 s'étend selon la direction axiale entre une portion d'extrémité arrière 68 et une portion d'extrémité avant 70.

L'anneau extérieur 24, plus particulièrement la portion d'extrémité arrière 68, est apte à être vissé au corps 12, plus particulièrement à la surface latérale 34 entre la face avant 42 et l'ouverture 32.

La portion d'extrémité avant 70 comprend un épaulement 72, l'épaulement étant prévu pour s'étendre contre un rebord 74 de la tête de pulvérisation 14, plus particulièrement contre le rebord 74 de la face avant de la tête de pulvérisation, à l'opposé du côté arrière 40.

L'anneau extérieur 24 est apte à être déplacé, ici par vissage sur le corps 12, selon la direction axiale, entre une position finale et au moins une position de réglage.

La position finale correspond à la position de vissage maximal de l'anneau extérieur 24 sur le corps 12.

Dans la position finale, l'épaulement 72 exerce une force sur la tête de pulvérisation 14 en direction du corps 12.

L'au moins une position de réglage correspond ici à toute position de vissage intermédiaire de l'anneau extérieur sur le corps, permettant un déplacement de la tête 14 par rapport à l'anneau extérieur 24.

Dans un mode de réalisation particulier, le pistolet 10 est pourvu d'un système de repérage de la position angulaire de la bague 18 par rapport au corps 12.

Le système de repérage comprend, par exemple, un marquage angulaire autour de la sortie sur la face avant 28 du corps 12 et au moins un repère sur la face externe 44 de la bague 18, plus particulièrement au niveau de la protubérance 42.

Alternativement, le système de repérage comprend, par exemple, un marquage angulaire sur la face externe 44 de la bague 18, plus particulièrement au niveau de la protubérance 42, et au moins un repère autour de la sortie sur la face avant 28 du corps 12 ou sur l'élément de blocage 22, plus particulièrement l'épaulement 60 de la tige.

Le système de repérage permet ainsi de repérer la position angulaire de la bague 18 par rapport au corps 12.

Cela permet notamment de reproduire ladite position angulaire sur un autre pistolet ou, par exemple, si l'ensemble des pièces doit être démonté.

L'invention concerne en outre une bague adaptée pour s'étendre entre un corps de pistolet de pulvérisation de produit de revêtement et un ensemble comprenant une tête de pulvérisation et une buse de pulvérisation, la bague étant telle que décrit précédemment.

L'invention concerne en outre un ensemble comprenant une tête de pulvérisation pour un pistolet de pulvérisation de produit de revêtement et au moins un élément d'indexation, la tête de pulvérisation et l'élément d'indexation étant tels que décrits précédemment.

L'invention concerne en outre un procédé d'indexation d'une position angulaire entre un corps et une tête de pulvérisation d'un pistolet tel que décrit précédemment.

Le procédé comprend les étapes suivantes, dans cet ordre :
- Fourniture du pistolet 10 tel que décrit précédemment, l'élément de blocage 22 étant dans la position de libération,
- Positionnement de la bague 18 par rapport au corps 12 dans une position angulaire relative, et
- Déplacement de l'élément de blocage 22 dans la position de blocage, de sorte que la bague 18, et ainsi la tête de pulvérisation 14, sont maintenues dans la position angulaire relative par rapport au corps 12.

Dans l'exemple décrit, dans l'étape de fourniture, la vis 66 n'est pas vissée jusqu'à la position de maintien de la tige 58. Ainsi, la vis 66 ne presse pas contre le renfoncement 62.

En outre, dans l'étape de fourniture, l'anneau extérieur 24 n'est, par exemple, pas monté sur le pistolet 10 ou il est dans une position de réglage.

Suite à l'étape de fourniture, la bague 18 est déplaçable en rotation par rapport au corps 12, autour de l'axe principal X.

La bague 18 est solidaire en rotation de la tête 14, et ici de la buse 16, de sorte qu'en réglant la position angulaire de la bague 18 par rapport au corps 12, il est réglé la position angulaire de la tête 14, et ici de la buse 16, par rapport au corps 12.

Dans un mode de réalisation particulier, le réglage de la position angulaire est, par exemple, réalisé à l'aide du système de repérage tel que décrit précédemment, par exemple en alignant l'au moins un repère avec une valeur ou emplacement du marquage angulaire.

Après positionnement de la bague 18 par rapport au corps 12 dans la position angulaire relative, l'élément de blocage 22 est déplacé dans la position de blocage, de sorte que la position angulaire relative est maintenue.

Plus particulièrement, ici, la vis 66 est vissée jusqu'à la position de maintien de la tige.

La coopération de la vis 66 avec le chanfrein 64 entraîne un déplacement de la tige 58 vers le corps 12, et ainsi dans la position de blocage.

Le procédé comprend en outre ici, après l'étape de déplacement de l'élément de blocage 22 dans la position de blocage, une étape de positionnement de l'anneau extérieur 24 dans la position finale.

L'anneau extérieur 24 est ici vissé sur le corps 12 jusqu'à la position finale, c'est-à-dire jusqu'à ce que l'épaulement 72 vienne en butée contre la tête de pulvérisation.

Si, après d'indexation du corps et de la tête de pulvérisation d'un pistolet dans la position angulaire, un changement de position angulaire vers une deuxième position angulaire est souhaité, le procédé comprend en outre les étapes suivantes, dans cet ordre :
- le cas échéant, déplacement de l'anneau extérieur 24 dans la position de réglage ou retrait de l'anneau extérieure,
- déplacement de l'élément de blocage 22 dans la position de libération,
- déplacement angulaire de la bague 18 par rapport au corps 12 dans la deuxième position angulaire,
- déplacement de l'élément de blocage 22 dans la position de blocage, et
- le cas échéant, positionnement de l'anneau extérieur 24 dans la position finale.

Plus particulièrement ici, la vis 66 est dévissée de l'ouverture, de sorte qu'elle n'appuie plus sur le renfoncement 62, et en particulier le chanfrein 64. La tige 58 est alors déplaçable dans la position de libération.

Le déplacement de l'élément de blocage 22 dans la position de blocage est, par exemple, réalisé tel que décrit précédemment.

Ainsi, le corps et la tête de pulvérisation, par l'intermédiaire de la bague, sont maintenant maintenus dans la deuxième position angulaire.

En cas de maintenance du pistolet nécessitant le démontage de la tête du corps, la tête, et ici la buse, sont démontées du reste du pistolet 10.

Plus particulièrement ici, l'anneau extérieur est démonté, puis la tête et la buse sont démontées du reste du pistolet.

La bague 18 reste à demeure et maintenue en position par rapport au corps 12 grâce à l'élément de blocage 22.

L'au moins un élément d'indexation 54 reste, par exemple, avec la tête 14, en particulier dans le trou 33 correspondant ou en tant que protubérance.

Après l'étape de maintenance nécessitant le démontage de la tête du corps, la tête, et ici la buse, sont remontées sur le corps, en alignant l'au moins une découpe et l'au moins un trou grâce à l'au moins un élément d'indexation.

Le cas échéant, l'anneau extérieur 24 est ensuite remonté sur le corps dans la position finale.

L'élément de maintien angulaire permet donc de maintenir la position angulaire entre la bague et la tête, et l'élément de blocage entre la bague et le corps.

Ainsi, grâce à l'invention, la tête, et ici la buse, sont remontées par rapport à la bague, et ainsi au corps, dans la même position angulaire que précédemment.

Le réglage de la position angulaire n'a donc pas été perdu par le démontage de la tête.

## Revendications

1. Pistolet (10) de pulvérisation de produit de revêtement comprenant un corps (12), une tête de pulvérisation (14) et une buse de pulvérisation (16), la tête de pulvérisation (14) délimitant un passage, la buse de pulvérisation (16) étant agencée dans le passage de la tête de pulvérisation (14), **caractérisé en ce que** le pistolet (10) comprend une bague (18), la bague (18) reliant la tête de pulvérisation (14) et le corps (12), le pistolet (10) comprenant un élément de maintien angulaire (20) de la position angulaire entre la bague (18) et la tête de pulvérisation (14), le pistolet (10) comprenant un élément de blocage (22), l'élément de blocage (22) étant déplaçable entre une position de blocage, dans laquelle il bloque la position angulaire de la bague (18) par rapport au corps (12), et une position de libération, dans laquelle il permet une rotation angulaire de la bague (18) par rapport au corps (12).

2. Pistolet selon la revendication 1, dans lequel l'élément de blocage (22) comprend une tige (58) pourvue d'un épaulement (60), la tige (58) se déplaçant entre la position de blocage et la position de libération, telle que, dans la position de blocage, l'épaulement (60) exerce une force pressant la bague (18) contre le corps (12) selon une direction axiale.

3. Pistolet selon la revendication 2, dans lequel la tête de pulvérisation (14) présente un axe principal (X), la tige (58) se déplaçant entre la position de blocage et la position de libération en translation selon la direction axiale, la direction axiale étant parallèle à l'axe principal (X) de la tête de pulvérisation (14).

4. Pistolet selon la revendication 2 ou 3, dans lequel le corps (12) présente un orifice (30) débouchant sur une face avant (28) du corps (12), la bague (18) s'étendant contre la face avant (28) du corps (12) dans la position de blocage de l'élément de blocage, la tige (58) s'étendant partiellement dans l'orifice (30), le corps (12) présentant une ouverture (32) s'étendant entre une face latérale (34) du corps (12) et l'orifice (30), de sorte que la tige (58) est accessible depuis la face latérale (34) par l'ouverture (32).

5. Pistolet selon la revendication 4, comprenant une vis (66), l'ouverture (32) étant taraudée, la vis (66) étant agencée dans l'ouverture (32) et étant apte à être vissé autour d'un axe de vissage jusqu'à une position de maintien de la tige (58), dans laquelle la vis (66) s'étend contre un renfoncement (62) de la tige (58), le renfoncement (62) présentant un chanfrein (64), le chanfrein (64) étant tel que, lorsque la vis (66) est vissée jusqu'à la position de maintien de la tige (58), la tige (58) est déplacée vers la position de blocage.

6. Pistolet selon l'une quelconque des revendications 1 à 5, dans lequel l'élément de maintien angulaire (20) de la position angulaire entre la bague (18) et la tête de pulvérisation (14) maintient en outre la position angulaire entre la tête de pulvérisation (14) et la buse de pulvérisation (16).

7. Pistolet selon l'une quelconque des revendications 1 à 6, dans lequel l'élément de maintien angulaire (20) de la position angulaire entre la bague et la tête de pulvérisation comprend au moins un élément d'indexation (54), la bague (18) présentant au moins une découpe (50) complémentaire de l'au moins un élément d'indexation (54), la tête de pulvérisation (14) présentant au moins un trou (33) complémentaire de l'au moins un élément d'indexation (54), le ou chaque élément d'indexation (54) s'étendant à travers la ou une découpe (50) respective et le ou un trou (33) respectif.

8. Ensemble comprenant une tête de pulvérisation (14) pour un pistolet (10) de pulvérisation de produit de revêtement, l'ensemble comprenant en outre au moins un élément d'indexation (54), la tête de pulvérisation (14) présentant au moins un trou (33) complémentaire de l'au moins un élément d'indexation (54), l'ensemble comprenant en outre une bague (18) adaptée pour s'étendre entre un corps (12) du pistolet (10) de pulvérisation de produit de revêtement et la tête de pulvérisation (14), la bague (18) présentant au moins une découpe (50) complémentaire de l'au moins un élément d'indexation (54), l'au moins une découpe (50) étant agencée de sorte que l'élément d'indexation (54) s'étendant à travers la découpe (50) respective s'étend à travers l'au moins un trou (33) de la tête de pulvérisation (14).

9. Ensemble comprenant une tête de pulvérisation (14) pour un pistolet (10) de pulvérisation de produit de revêtement, l'ensemble comprenant en outre au moins un élément d'indexation (54), la tête de pulvérisation (14) présentant au moins un trou (33) complémentaire de l'au moins un élément d'indexation (54), la tête de pulvérisation (14) définissant un côté arrière (40) à l'opposé de la pulvérisation du produit de revêtement et un côté avant opposé au côté arrière (40), le ou chaque élément d'indexation (54) s'étendant à travers la ou un trou (33) respectif, dépassant dudit trou (33) du côté arrière (40) puis du côté avant de la tête de pulvérisation (14) selon une direction axiale de la tête de pulvérisation (14).

10. Procédé d'indexation d'une position angulaire entre un corps (12) et une tête de pulvérisation (14) d'un pistolet (10) selon l'une quelconque des revendications 1 à 7, comprenant les étapes suivantes :
- Fourniture du pistolet (10) selon l'une quelconque des revendications 1 à 7, l'élément de blocage (22) étant dans la position de libération,
- Positionnement de la bague (18) par rapport au corps (12) dans une position angulaire relative,
- Déplacement de l'élément de blocage (22) dans la position de blocage, de sorte que la bague (18), et ainsi la tête de pulvérisation (14), sont maintenues dans la position angulaire relative par rapport au corps (12).
